# EUROPÄISCHE PATENTSCHRIFT

(11) **EP 1 117 158 B1**
(45) Veröffentlichungstag und Bekanntmachung des Hinweises auf die Patenterteilung: **13.02.2008**
(21) Anmeldenummer: 00126936.4
(22) Anmeldetag: 08.12.2000
(51) Int. Cl.: H01R 13/658

(54) **Vorrichtung zur Schirmung für Anschlussleisten**
Device for shielding of a fixing device for connector strips
Dispositif de blindage de fixation d'élements de raccordement

(30) Priorität: 14.01.2000 DE 10001553
(43) Veröffentlichungstag der Anmeldung: 18.07.2001
(73) Patentinhaber: ADC GMBH, 14167 Berlin (DE)
(72) Erfinder: Müller, Manfred, 13156 Berlin (DE)

(56) Entgegenhaltungen:
- EP-A- 0 658 059
- DE-C- 19 537 531
- US-A- 5 575 665

## Beschreibung

Die Erfindung betrifft eine Vorrichtung zur Schirmung für Anschlussleisten für die Telekommunikations- und Datentechnik mit Schneid-Klemm-Kontaktelementen, die zwei zueinander abgewinkelte Klemmleisten für Doppeladern mit Schirmung umfassen, wobei die Vorrichtung ein Schirmblech umfaßt. Eine derartige Vorrichtung gemäß dem Oberbegriff des Anspruches 1 ist aus der DE 195 37 531 C1 bekannt.

Die in der Telekommunikations- und Datentechnik verwendeten Anschluss-, Schalt- und Trennleisten sind entsprechend der DE 28 04 478 C2 mit Schneid-Klemm-Kontakten bestückt und erlauben die Beschaltung in einer Ebene. Die Anschaltkontakte auf der Kabelader- und der Schaltseite sind in gleicher Arbeitshöhe frontseitig angeordnet. Die Leisten werden dann nach der Verdrahtung auf Profilstangen aufgeschoben.

Insbesondere bei Anwendungen mit hohen Übertragungsgeschwindigkeiten müssen die Adern gegeneinander geschirmt werden. Die Schirmungen müssen dabei auf einem festen Bezugspotential liegen. Hierzu ist es bekannt, der Leiste ein Schirmblech und ein Kontaktblech zuzuordnen. Das Kontaktblech erstreckt sich über die gesamte Unterseite der Leiste und kontaktiert von der Unterseite die Schneid-Klemm-Kontakte für die Schirmung. Auf das leicht federnd vorgespannte Kontaktblech wird dann das Schirmblech befestigt, wobei über die Federung ein guter elektrischer Kontakt zwischen dem Kontaktblech und Schirmblech hergestellt wird. Das Schirmblech weist zusätzlich Verbindungsmittel zu den Profilstangen auf, wodurch das Schirmblech über die Profilstangen fest mit Masse verbindbar ist. Des weiteren ist das Schirmblech mit einem Schraubkontakt ausgebildet. Zum Anschließen der Schirmung eines Kabels mit mehreren Doppeladern auf der Kabeladerseite wird die Schirmung verdrillt und über den Schraubkontakt mit dem Schirmblech verbunden. Auf der Schaltseite werden dann die einzelnen Schirmungen von Doppeladern in die zugehörigen Schneid-Klemm-Kontaktelemente geschaltet. Über das Kontaktblech sind diese Schirmungen dann ebenfalls mit Masse verbunden.

Aus der DE 196 52 422 C1 ist eine Anschlussleiste für die Telekommunikations- und Datentechnik mit Schneid-Klemm-Kontaktelementen bekannt, bei der die Schneid-Klemm-Kontaktelemente durchgehend in zwei zueinander abgewinkelt angeordneten Isolierkörpern eingebracht sind, wobei die Schneid-Klemm-Kontaktelemente zwei Reihen von zueinander abgewinkelten Klemmleisten bilden. Aufgrund der geometrischen Anordnung der Kontaktelemente sind die bekannten Vorrichtungen zur Schirmung für Anschlussleisten nicht verwendbar, wobei sich nachfolgend der Begriff Anschlussleiste auch auf Trenn- und Schaltleisten beziehen soll.

Der Erfindung liegt daher das technische Problem zugrunde, eine Vorrichtung zur Schirmung für Anschlussleisten zu schaffen, die zwei Klemmleisten umfasst, wobei die beiden Klemmleisten entweder zueinander parallel oder zueinander abgewinkelt ausgerichtet sein können.

Die Lösung des technischen Problems ergibt sich durch den Gegenstand mit den Merkmalen der Patentansprüche 1 und 10. Weitere vorteilhafte Ausgestaltungen der Erfindung ergeben sich aus den Unteransprüchen.

Hierzu umfasst die Vorrichtung ein Schirmblech und eine Reihe von Kontaktfingern, wobei die Kontaktfinger in die zugehörigen Schneid-Klemm-Kontaktelemente anschliessbar sind. Das Schirmblech weist ein Kontaktelement, das vorzugsweise als Schraubkontakt ausgebildet ist, auf und ist über ein Verbindungselement mit Profilstangen oder anderen Erdungselementen verbindbar. Des weiteren sind das Schirmblech und die Reihe von Kontaktfingern miteinander elektrisch verbunden. Da die jeweils paarweise miteinander verknüpften Schneid-Klemm-Kontakte der beiden Klemmleisten miteinander elektrisch verbunden sind, sind die Schneid-Klemm-Kontaktelemente der Schaltseite über die Kontaktfinger an der Kabeladerseite mit dem Schirmblech verbunden. Dadurch liegt eine an die Schneid-Klemm-Kontakte der Schaltseite angeschlossene Schirmung ebenfalls auf Masse.

In einer weiteren bevorzugten Ausführungsform sind das Schirmblech und die Reihe von Kontaktfingern einstückig ausgebildet. Dadurch werden Kontaktprobleme zwischen dem Schirmblech und den Kontaktfingern vermieden, und die Schirmvorrichtung wird durch ein einziges Element gebildet. Vorzugsweise sind die Kontaktfinger dabei über einen Steg in eine zum Schirmblech parallele Ebene geführt. Dadurch liegen die Adern eines anzuschließenden Kabels unmittelbar vor den Schneid-Klemm-Kontaktelementen.

In einer weiteren bevorzugten Ausführungsform werden jeweils zwei Anschlussleisten paarweise gemeinsam geschirmt. Hierzu werden die beiden Anschlussleisten derart zueinander gedreht, dass sich die beiden Kabeladerseiten gegenüber liegen. Die Vorrichtung zur Schirmung umfasst dabei zwei Reihen von Kontaktfingern, die jeweils mit den Schneid-Klemm-Kontaktelementen der Kabeladerseite für die Schirmung verbunden sind. Über ein Schwenkelement sind die beiden Reihen von Kontaktfingern mit einem einzigen Schirmblech verbunden. Dies ergibt einen sehr kompakten Aufbau. Zum Anschließen der Adern werden die beiden Anschlussleisten über das Schwenkelement auseinander geklappt. Nachdem die Kontaktfinger und die Adern in den Schneid-Klemm-Kontaktelementen der Kabeladerseiten angeschlossen sind, werden diese zueinander geschwenkt.

Vorzugsweise ist das Schirmblech mit zwei seitlichen Abkantungen ausgebildet, die vorzugsweise die Form eines Auges mit Bohrung aufweisen. Durch diese Bohrung kann dann eine Schwenkachse des Schwenkelementes geführt werden, so dass diese miteinander elektrisch und mechanisch verbunden sind.

Aus Stabilitäts- und Befestigungsgründen sind die Kontaktfinger vorzugsweise Bestandteil eines Schirm-Kontaktbleches, das ein brückenförmiges Basisblech umfasst, das mit den Schwenkarmen des Schwenkelementes verbunden ist.

Das Schirmblech ist vorzugsweise mit T-förmigen Stegen und/oder T-förmigen Freischnitten ausgebildet, um die ein Kabelbinder gebunden werden kann, so dass der Kabelbinder und somit das zu befestigende Kabel am Schirmblech fixierbar ist.

Die Erfindung wird nachfolgend anhand eines bevorzugten Ausführungsbeispiels näher erläutert. Die Fig. zeigen:
- Fig. 1: eine Vorderansicht einer Anschlussleiste mit einer Vorrichtung zur Schirmung im unverbundenen Zustand,
- Fig. 2: eine Perspektivdarstellung der Anschlussleiste mit verbundener Vorrichtung zur Schirmung,
- Fig. 3: eine Perspektivdarstellung zweier Anschlussleisten mit einer gemeinsamen Vorrichtung zur Schirmung im aufgeklappten Zustand,
- Fig. 4: eine Perspektivdarstellung eines Drahtführungselementes,
- Fig. 5: eine Perspektivdarstellung einer Vorrichtung zur Schirmung für zwei Anschlussleisten,
- Fig. 6: eine Seitenansicht zweier Anschlussleisten mit einer Vorrichtung zur Schirmung im zugeklappten Zustand und
- Fig. 7: eine Seitenansicht zweier Anschlussleisten mit einer Vorrichtung zur Schirmung im aufgeklappten Zustand.

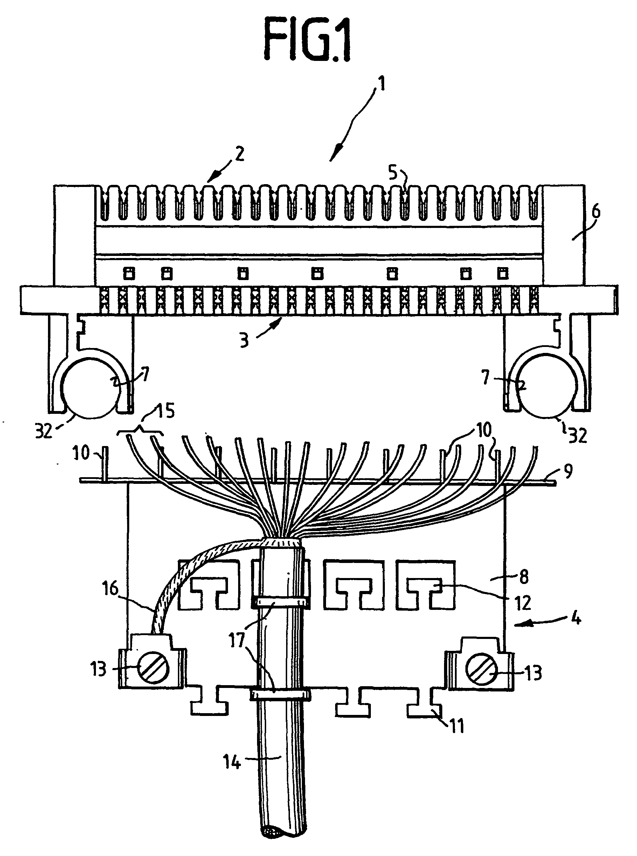

In der Fig. 1 ist eine Anschlussseite 1 mit zwei zueinander abgewinkelten Klemmleisten 2, 3 und eine Vorrichtung 4 zur Schirmung dargestellt. Jede Klemmleiste 2, 3 umfasst 24 Schneid-Klemm-Kontaktelemente 5, wobei die jeweils gegenüberliegenden Schneid-Klemm-Kontaktelemente 5 der beiden Klemmleisten 2,3 miteinander elektrisch verbunden sind. Die Schneid-Klemm-Kontaktelemente 5 sind in einen Isolierkörper 6 angeordnet, an dessen Unterseite halbschalenförmige Befestigungselemente 7 angeordnet sind, mittels derer die Anschlussleiste 1 auf eine Profilstange 32 aufschiebbar oder aufrastbar ist. Jeweils drei benachbarte Schneid-Klemm-Kontaktelemente 5 dienen zur Beschaltung einer Doppelader mit Schirmung. Die obere Klemmleiste 2 bildet dabei die Schaltseite, und die vertikal hierzu ausgerichtete Klemmleiste 3 bildet die Kabeladerseite. Hinsichtlich der detaillierten Ausgestaltung der Schneid-Klemm-Kontaktelemente 5 wird auf die DE 196 52 422 C1 verwiesen, auf die hiermit ausdrücklich Bezug genommen wird.

Die Vorrichtung 4 zur Schirmung umfasst ein Schirmblech 8, einen senkrecht zum Schirmblech 8 angeordneten Steg 9 und eine Reihe von Kontaktfingern 10. Am Schirmblech 8 sind an seiner Unterseite T-förmige Stege 11 und mittig weitere T-förmige Stege 12 vorgesehen, wobei die Stege 12 entsprechend freigeschnitten sind. Des weiteren weist das Schirmblech 8 zwei Schraub-Kontaktelemente 13 auf. Der Steg 9 steht senkrecht von der Oberseite des Schirmbleches 8 ab, wobei die Reihe von Kontaktfingern 10 wieder senkrecht zum Steg 9 ausgebildet ist. Dadurch spannen die Kontaktfinger 10 eine zum Schirmblech 8 parallele Ebene auf. Das Schirmblech 8, der Steg 9 und die Reihe von Kontaktfingern 10 sind dabei vorzugsweise einstückig ausgebildet.

Zum Anschließen eines Kabels 14 mit acht Doppeladern 15 und Schirmung 16 wird dies zunächst mittels Kabelbinder 17 an den T-förmigen Stegen 11 und 12 befestigt. Die Schirmung 16 wird verdrillt und über eines der Schraub-Kontaktelemente 13 mechanisch und elektrisch mit dem Schirmblech 8 verbunden. Über eine nicht dargestellte Verbindung wird dann im montierten Zustand das Schirmblech 8 mit den Profilstangen 32 elektrisch verbunden und über diese geerdet. Die Doppeladerpaare 15 werden sortiert und in ihre zugehörigen Schneid-Klemm-Kontaktelemente 5 eingedrückt. Die Reihe von Kontaktfingern 10 wird dabei in die Schneid-Klemm-Kontaktelemente 5 für die Schirmung 16 eingedrückt, wobei jedes dritte Schneid-Klemmkontaktelement mit einem Kontaktfinger belegt wird. Somit liegen die für die Schirmung 16 vorgesehenen Schneid-Klemm-Kontaktelemente 5 der Klemmleiste 3 über die Kontaktfinger 10, den Steg 9 und das Schirmblech 8 auf Masse. Da die Schneid-Klemm-Kontaktelemente 5 für die Schirmung der Klemmleiste 3 mit den Schneid-Klemm-Kontaktelementen 5 für die Schirmung der Klemmleiste 2 verbunden sind, liegt somit eine in den Schneid-Klemm-Kontaktelementen 5 befestigte Schirmung auf der Schaltseite ebenfalls auf Masse. Die Anzahl der Kontaktfinger 10 entspricht dabei der Anzahl zu schirmender Doppeladern 15, wobei deren Abstand zueinander auf den Abstand der zugehörigen Schneid-Klemm-Kontaktelemente 5 für die Schirmung abgestimmt ist.

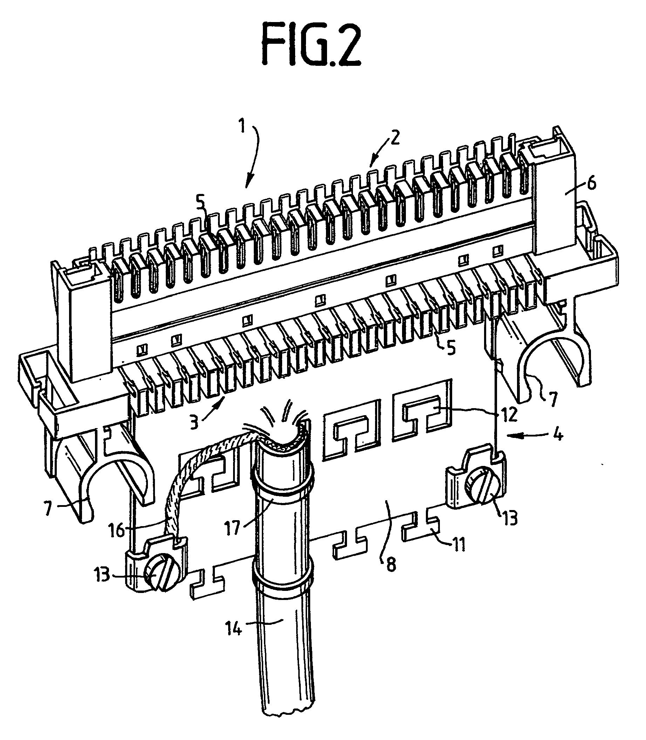

In der Fig. 2 ist die Anschlussleiste 1 mit der befestigten Vorrichtung 4 zur Schirmung dargestellt, wobei aus Gründen der Übersicht auf eine Darstellung der angeschlossenen Doppeladern verzichtet wurde. Das Grundprinzip der Vorrichtung 4 zur Schirmung besteht vereinfacht ausgedrückt darin, die Schirmung 16 eines oder mehrerer Kabel 14 auf der Kabeladerseite über eine oder beide Schraub-Kontaktelemente 13 und über die Kontaktfinger 10 die Schneid-Klemm-Kontaktelemente 5 der Kabeladerseite und damit aufgrund der elektrischen Verbindung auf der Schaltseite zu erden.

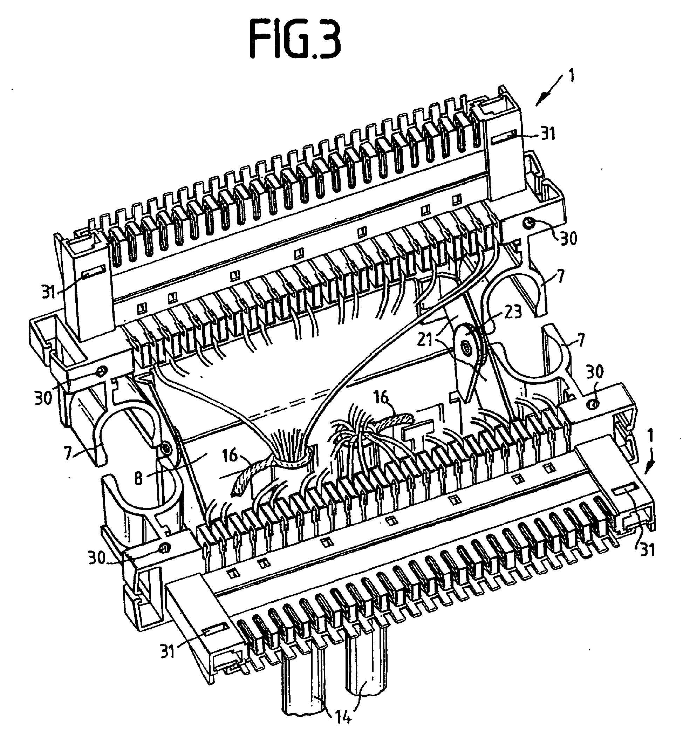

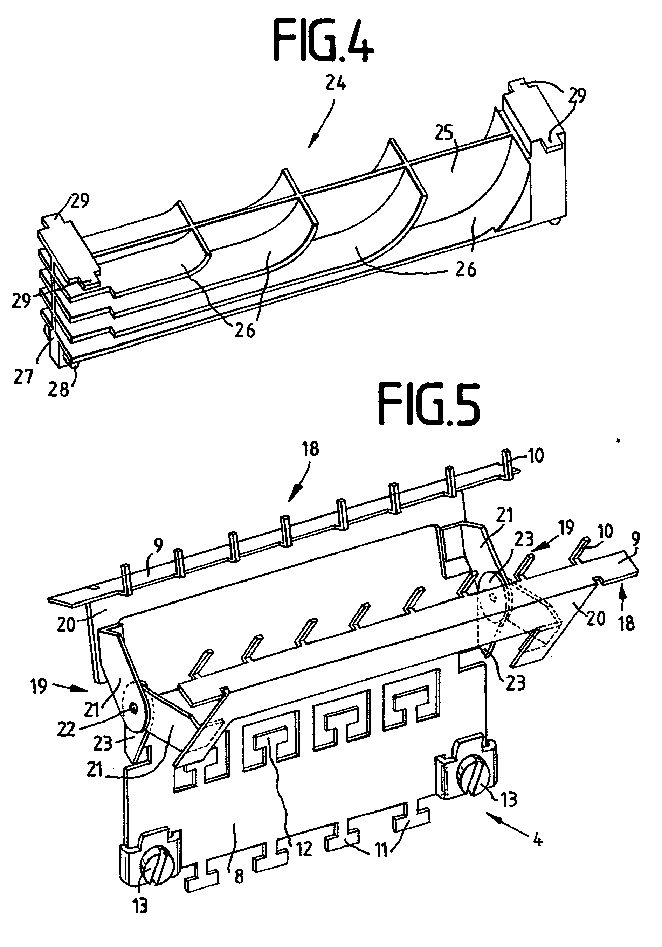

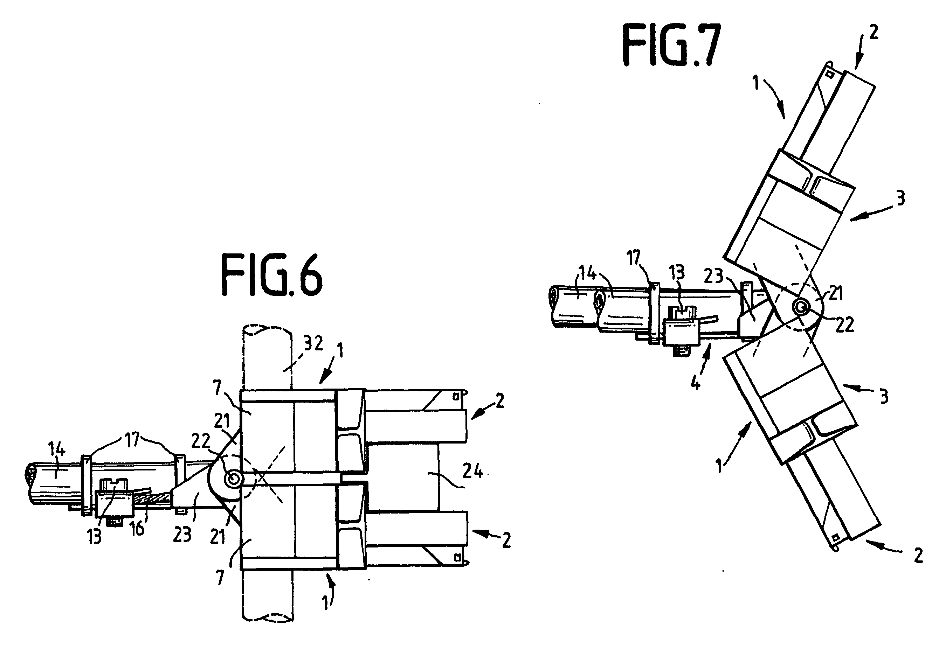

In der Fig. 3 und 7 ist perspektivisch bzw. in einer Seitenansicht eine Vorrichtung 4 zum Schirmen zweier Anschlussleisten 1 in einer ersten Stellung dargestellt. Die Vorrichtung 4 ist dabei ohne die Anschlussleisten 1 in Fig. 5 dargestellt und soll zunächst anhand dieser Figur näher erläutert werden. Die Vorrichtung 4 umfasst ein Schirmblech 8, zwei Schirm-Kontaktbleche 18 mit jeweils einer Reihe von Kontaktfingern 10 und zwei Schenkelemente 19. Das Schirmblech 8 ist wieder mit T-förmigen Stegen 11 und 12 ausgebildet. Des weiteren weist das Schirmblech 8 zwei Schraub-Kontaktelemente 13 auf. Das Schirm-Kontaktblech 18 umfasst ein Basisblech 20, auf dem senkrecht ein Steg 9 steht, auf dem senkrecht die Kontaktfinger 10 stehen. Das Schwenkelement 19 umfasst zwei Schwenkarme 21, die über eine Schwenkachse 22 miteinander drehbar verbunden sind. Dabei ist jeweils ein Schwenkarm 21 des Schwenkelementes 19 mit einem Basisblech 20 der Kontaktbleche 18 elektrisch und mechanisch verbunden. Des weiteren ist das Schirmblech 8 an seiner Oberseite an beiden Seiten mit einer Abkantung 23 ausgebildet. Diese Abkantung 23 in Form eines Auges weist eine Bohrung auf, durch die die Schenkachse 22 geführt ist. Über die Schwenkachse 22 ist somit das Schwenkelement 19 mit dem Schirmblech 8 mechanisch und elektrisch verbunden.

Wie in Fig. 3 ersichtlich, werden die beiden Anschlussleisten 1 zueinander gedreht, so dass die beiden Kabeladerseiten sich gegenüberliegen. Die beiden Kabel 14 werden wieder über Kabelbinder an den T-förmigen Stegen 11 und 12 befestigt. Die beiden Schirmungen 16 werden mittels der Schraub-Kontaktelemente 13 am Schirmblech 8 befestigt. Die Kontaktfinger 10 des einen Kontaktbleches 18 werden in die Schneid-Klemm-Kontaktelemente 5 für die Schirmungen auf der Kabeladerseite der einen Anschlussleiste 1 gedrückt. Entsprechendes gilt für die Kontaktfinger 10 des anderen Kontaktbleches 18 für die andere Anschlussleiste 1. Im aufgeklappten Zustand sind die Schneid-Klemm-Kontaktelemente 5 für die Doppeladern an der Kabeladerseite gut zugänglich.

Aufgrund der geometrischen Ausgestaltung der Anschlussleisten 1, ergibt sich zwischen den beiden Klemmleisten 2, die jeweils die Schaltseite bilden, im zusammengeklappten Zustand ein Hohlraum. In diesem Hohlraum wird ein Drahtführungselement 24 angeordnet, das in Fig. 4 perspektivisch dargestellt ist. Das Drahtführungselement 24 dient zur Führung des an die Klemmleiste anzuschließenden Kabels (nicht dargestellt), das an den Stirnseiten 27 in das entsprechende Führungselement 26 eingeführt und an das entsprechende Schneid- Klemm- Kontaktelement 5 herangeführt wird. Das Drahtführungselement 24 umfasst eine Mittelplatte 25, an deren Seiten jeweils übereinander vier abgerundete Führungselemente 26 angeordnet sind. Die Führungselemente 26 sind jeweils von einer offenen Stirnseite 27 von außen zugänglich. Im dargestellten Ausführungsbeispiel sind alle Führungselemente 26 zu einer Stirnseite 27 geführt. Es sind jedoch auch Ausführungsformen möglich, bei der die Führungselemente 26 der einen Seite zu einer Stirnseite 27 und die Führungselemente der anderen Seite zu der anderen Stirnseite 27 herausgeführt sind, wobei dann die Führungselemente 26 entsprechend angepasst sind. An der Unterseite der Stirnfläche 27 ist das Drahtführungselement 24 mit jeweils zwei zylinderförmigen Zapfen 28 ausgebildet. An der Oberseite der Stirnflächen 27 ist das Drahtführungselement 24 mit jeweils zwei zungenartigen Stegen 29 ausgebildet. Die Zapfen 28 und Stege 29 korrespondieren mit entsprechenden Bohrungen 30 und Schlitzen 31 an den Anschlussleisten 1, die in Fig. 3 dargestellt sind. Nachdem die Kabeladerseiten der Anschlussleisten 1 beschaltet sind, wird das Drahtführungselement 24 mit seinen Zapfen 28 und Stegen 29 in die Bohrungen 30 und Schlitze 31 einseitig eingelegt und die Anschlussleisten 1 mittels des Schwenkelementes 19 zueinander gedreht, wodurch die Zapfen 28 und Stege 29 auf der anderen Seite ebenfalls in die Bohrungen 30 und Schlitze 31 der anderen Anschlussleiste 1 eingreifen.

Der Endzustand im zusammengeklappten Zustand ist in Fig. 6 in einer Seitenansicht dargestellt. Wie der Darstellung zu entnehmen ist, ergibt sich eine sehr kompakte Schaltungsanordnung, wobei die Schneid-Klemm-Kontaktelemente 5 der Kabeladerseite der beiden Anschlussseiten von außen nicht mehr zugänglich sind und somit auch nicht mehr manipuliert werden können, wohingegen die Schneid-Klemm-Kontaktelemente 5 der Schaltseite der beiden Anschlussleisten 1 frei zugänglich bleiben. Im zugeklappten Zustand stehen die Befestigungselemente 7 (Fig. 6) bündig übereinander, so dass die Gesamtanordnung auf eine Profilstange 32 aufschiebbar ist, mit der das Schirmblech 8 verbunden ist.

### Bezugszeichenliste

- 1): Anschlussleiste
- 2): Klemmleiste (Schaltseite)
- 3): Klemmseite (Kabeladerseite)
- 4): Vorrichtung
- 5): Schneid-Klemm-Kontaktelement
- 6): Isolierkörper
- 7): Befestigungselement
- 8): Schirmblech
- 9): Steg
- 10): Kontaktfinger
- 11): Steg
- 12): Steg
- 13): Schraub-Kontaktelement
- 14): Kabel
- 15): Doppelader
- 16): Schirmung
- 17): Kabelbinder
- 18): Schirm-Kontaktblech
- 19): Schwenkelement
- 20): Basisblech
- 21): Schwenkarme
- 22): Schwenkachse
- 23): Abkantung
- 24): Drahtführungselement
- 25): Mittelplatte
- 26): Führungselemente
- 27): Stirnseite
- 28): Zapfen
- 29): Steg
- 30): Bohrung
- 31): Schlitz
- 32): Profilstange

## Patentansprüche

1. Vorrichtung (4) zur Schirmung für Anschlussleisten für die Telekommunikations- und Datentechnik mit Schneid-Klemm-Kontakteiementen (5), die zwei Klemmleisten für Doppeladern mit Schirmung umfassen, wobei die Vorrichtung (4) ein Schirmblech (8) umfaßt,
**dadurch gekennzeichnet, dass**
das Schirmblech (8), das mit mindestens einem Kontaktelement (13) zum Anschließen einer Schirmung (16) ausgebildet ist, mindestens eine Reihe von Kontaktfingern (10) umfasst, wobei die Kontaktfinger (10) in den der Schirmung zugeordneten Schneid-Klemm-Kontaktelementen (5) der einen Klemmleiste (3) anschließbar sind und die Kontaktfinger (10) mit dem Schirmblech (8) elektrisch verbunden sind.

2. Vorrichtung nach Anspruch 1, **dadurch gekennzeichnet, dass** das Schirmblech (8) und die Kontaktfinger (10) einstückig ausgebildet sind.

3. Vorrichtung nach Anspruch 1, zur Schirmung zweier Anschlussleisten, **dadurch gekennzeichnet, dass** jeder Anschlussleiste (1) eine Reihe von Kontaktfingern (10) zugeordnet ist, die über ein Schwenkelement (19) mit dem Schirmblech (8) verbunden sind.

4. Vorrichtung nach Anspruch 3, **dadurch gekennzeichnet, dass** das Schirmblech (8) mit einer Abkantung (23) ausgebildet ist, die mit einer Schwenkachse (22) des Schwenkelementes (19) verbunden ist.

5. Vorrichtung nach einem der Ansprüche 3 oder 4, **dadurch gekennzeichnet, dass** die Vorrichtung (4) mit zwei Schirm-Kontaktblechen (18) ausgebildet ist, die jeweils ein Basisblech (20), einen Steg (9) und die Reihe von Kontaktfingern (10) umfassen, wobei die Basisbleche (20) mit Schwenkarmen (21) des Schwenkelementes (19) elektrisch und mechanisch verbunden sind.

6. Vorrichtung nach Anspruch 5, **dadurch gekennzeichnet, dass** der Steg (9) senkrecht auf dem Basisblech (20) steht, wobei die Kontaktfinger (10) senkrecht zum Steg (9) ausgerichtet sind.

7. Vorrichtung nach Anspruch 5 oder 6, **dadurch gekennzeichnet, dass** das Schirm-Kontaktblech (18) einstückig ausgebildet ist.

8. Vorrichtung nach einem der vorangegangenen Ansprüche, **dadurch gekennzeichnet, dass** das Schirmblech mit T-förmigen Stegen (11) und/oder T-förmigen Freischnitten (12) ausgebildet ist.

9. Vorrichtung nach einem der vorangegangenen Ansprüche, **dadurch gekennzeichnet, dass** die Kontaktfinger (10) im äquidistanten Abstand zueinander angeordnet sind.

10. Anordnung für die Telekommunikations- und Datentechnik, umfassend zwei zueinander gedrehte Anschlussleisten (1), die jeweils zwei zueinander abgewinkelte Klemmleisten (2,3) umfassen, und eine Vorrichtung (4) zur Schirmung nach Anspruch 3.

11. Anordnung nach Anspruch 10, **dadurch gekennzeichnet, dass** zwischen den Klemmleisten (2) der beiden Anschlussleisten (1) ein Drahtführungselement (24) angeordnet ist.

12. Anordnung nach Anspruch 11, **dadurch gekennzeichnet, dass** das Drahtführungselement (24) mit Zapfen (28) und/oder Stegen (29) ausgebildet ist, die in korrespondierende Bohrungen und/oder Schlitze (31) der Anschlussleisten (1) eingreifen.

## Claims

1. Shielding device (4) for terminal blocks in telecommunications and data engineering, with insulation displacement contact elements (5) which comprise two terminal strips for twin wires with shielding, wherein the device (4) comprises a shielding plate (8), **characterized in that** the shielding plate (8) which is formed with at least one contact element (13) for a shield (16) to be connected, comprises at least one row of contact fingers (10), it being possible for the contact fingers (10) to be connected into the insulation displacement contact elements (5) assigned to the shield in one terminal strip (3), and the contact fingers (10) being connected electrically to the shielding plate (8).

2. Device according to Claim 1, **characterized in that** the shielding plate (8) and the contact fingers (10) are formed in one piece.

3. Device according to Claim 1, for shielding two terminal blocks, **characterized in that** each terminal block (1) is assigned a row of contact fingers (10), which are connected to the shielding plate (8) via a pivoting element (19).

4. Device according to Claim 3, **characterized in that** the shielding plate (8) is formed with a turned-over edge (23), which is connected to a pivot (22) of the pivoting element (19).

5. Device according to either of Claims 3 and 4, **characterized in that** the device (4) is formed with two shielding contact plates (18), which each comprise a baseplate (20), a web (9) and the row of contact fingers (10), the baseplates (20) being connected electrically and mechanically to pivoting arms (21) of the pivoting element (19).

6. Device according to Claim 5, **characterized in that** the web (9) is perpendicular to the baseplate (20), the contact fingers (10) being oriented perpendicular to the web (9).

7. Device according to Claim 5 or 6, **characterized in that** the shielding contact plate (18) is formed in one piece.

8. Device according to one of the preceding claims, **characterized in that** the shielding plate is formed with T-like webs (11) and/or T-like clearance cuts (12).

9. Device according to one of the preceding claims, **characterized in that** the contact fingers (10) are arranged at equidistant intervals from one another.

10. Arrangement for telecommunications and data engineering, comprising two mutually rotated terminal blocks (1) which each comprise two terminal strips (2, 3), which are rotated toward each other, and a shielding device (4) according to Claim 3.

11. Arrangement according to Claim 10, **characterized in that** a wire-guide element (24) is arranged between the terminal strips (2) of the two terminal blocks (1).

12. Arrangement according to Claim 11, **characterized in that** the wire-guide element (24) is formed with pins (28) and/or webs (29), which engage in corresponding holes and/or slots (31) in the terminal blocks (1).

## Revendications

1. Dispositif (4) pour le blindage d'un système de fixation de barrettes de raccordement pour les télécommunications et des systèmes de données, avec des éléments à borne guillotine (5), qui comprennent deux barrettes à bornes pour des conducteurs doubles avec blindage, dans lequel le dispositif (4) comprend une tôle de blindage (8), **caractérisé en ce que** la tôle de blindage (8), qui est formée avec au moins un élément de contact (13) pour le raccordement d'un blindage (16), comporte au moins une série de doigts de contact (10), dans lequel les doigts de contact (10) peuvent être raccordés dans les éléments de contact à borne guillotine (5) d'une première barrette à bornes (3) associés au blindage et les doigts de contact (10) sont reliées électriquement à la tôle de blindage (8).

2. Dispositif selon la revendication 1, **caractérisé en ce que** la tôle de blindage (8) et les doigts de contact (10) sont formés d'une seule pièce.

3. Dispositif selon la revendication 1, pour le blindage de deux barrettes de raccordement, **caractérisé en ce qu'**une série de doigts de contact (10) sont associés à chaque barrette de raccordement (1) et sont reliés à la tôle de blindage (8) au moyen d'un élément pivotant (19).

4. Dispositif selon la revendication 3, **caractérisé en ce que** la tôle de blindage (8) est formée avec un rebord (23), qui est relié à un axe de pivotement (22) de l'élément pivotant (19).

5. Dispositif selon la revendication 3 ou 4, **caractérisé en ce que** le dispositif (4) est pourvu de deux tôles de contact de blindage (18), qui comprennent chaque fois une tôle de base (20), une nervure (9) et la série de doigts de contact (10), dans lequel les tôles de base (20) sont reliées électriquement et mécaniquement à des bras pivotants (21) de l'élément pivotant (19).

6. Dispositif selon la revendication 5, **caractérisé en ce que** la nervure (9) est perpendiculaire sur la tôle de base (20), dans lequel les doigts de contact (10) sont orientés perpendiculairement à la nervure (9).

7. Dispositif selon la revendication 5 ou 6, **caractérisé en ce que** la tôle de contact de blindage (18) est formée d'une seule pièce.

8. Dispositif selon l'une quelconque des revendications précédentes, **caractérisé en ce que** la tôle de blindage est formée avec des nervures en forme de T (11) et/ou des encoches en forme de T (12).

9. Dispositif selon l'une quelconque des revendications précédentes, **caractérisé en ce que** les doigts de contact (10) sont disposés à égale distance l'un de l'autre.

10. Ensemble pour les télécommunications et les systèmes de données, comprenant deux barrettes de raccordement (1) tournées l'une par rapport à l'autre, qui comprennent chaque fois deux barrettes à bornes (2, 3) respectivement coudées l'une par rapport à l'autre, et un dispositif (4) de blindage selon la revendication 3.

11. Ensemble selon la revendication 10, **caractérisé en ce qu'**un élément de guidage de fil (24) est disposé entes les barrettes à bornes (2) des deux barrettes de raccordement (1).

12. Ensemble selon la revendication 11, **caractérisé en ce que** l'élément de guidage de fil (24) est pourvu de tenons (28) et/ou de nervures (29), qui s'engagent dans des perçages correspondants et/ou des fentes correspondantes (31) des barrettes de raccordement (1).
